# EUROPEAN PATENT APPLICATION

(11) **EP 1 669 216 A1**
(43) Date of publication of application: **14.06.2006**
(21) Application number: 05111724.0
(22) Date of filing: 06.12.2005
(51) Int. Cl.: B60C 9/08, B60C 19/00

(54) **Method and apparatus for torque wind-up reduction in a free-rolling dual tire assembly**

(30) Priority: 13.12.2004 US 10520
(71) Applicant: THE GOODYEAR TIRE & RUBBER COMPANY, Akron, Ohio 44316-0001 (US)
(72) Inventor: Richards, Gary William, Clinton, OH Ohio 44216 (US); Swift, Douglas Ashley, Hudson, OH Ohio 44236 (US); Brown, Stephanie Carol, Akron, OH Ohio 44319 (US)
(74) Representative: Kutsch, Bernd

(57) **Abstract**

A dual tire assembly for free rolling applications is disclosed. Each tire is constructed having the tire carcass slightly angled away from the conventional ninety degree configuration to minimize torque windup caused by interaction between the individual tires in the dual assembly. Such a deviation from ninety degrees is made relatively small enough to avoid experiencing a significant rolling resistance penalty in each tire yet large enough so that the torque windup effect of one tire on the other tire is minimized. A method of reducing torque windup in a dual tire assembly is achieved comprising the steps: configuring both tires in a dual assembly to provide a carcass angled slightly from 80 to 100 degrees; mounting such tires in proximal relationship in a dual tire assembly on a common axle; operating both tires in a free rolling mode of operation; and using the angled carcass of each tire to minimize the effect of torque windup imposed by the opposite tire.

## Description

### Field of the Invention

The present invention relates to pneumatic tires and, more specifically, to truck trailer tandem tire systems in which the trailer tires have a ply carcass construction.

### Background of the Invention

Conventional truck trailer tires have a carcass construction extending between two wheel rim contacting bead portions through sidewall portions to a ground contacting tread portion. The tire carcass is conventionally reinforced by one or more plies of cord reinforced tire fabric extending continuously from bead to bead.

The ground contacting tread region is further reinforced between tread edges by a circumferentially extending annular belt package comprising a plurality of plies of cord reinforced rubber fabric disposed radially outwardly of the carcass ply and inwardly of the tread rubber. Truck tire construction common in the industry is representatively shown in the form of a super single tire configuration in US-B- 6,619,357.

In practice, it is common to mount dual trailer tires on a common axle side where the two tires operate in tandem as a free-rolling dual assembly. However, in such a configuration, a problem arises as each free-rolling tire in a tandem pair is at odds with and fights against the mating dual tire. While one tire is torquing up, the mate is experiencing increasing negative torque to the detriment of tire performance. Such a consequence is due to a number of factors such as slightly different rolling tire diameters between the dual tires; different inflation levels between the two tires; and/or different road crown conditions that each tire encounters. As a result, for long haul trailer applications, tire free-rolling torque issues may be responsible for higher rates of wear for both tires in the dual assembly.

Consequently, the industry is in need of a dual tire assembly and mounting method that will minimize free-rolling torque interaction between the tires in an assembly. A solution to the industry's needs, ideally, would accomplish such an objective without requiring that tires in a dual assembly be manufactured in a cost prohibitive manner or requiring that special modifications to the trailer wheel axle be made. Moreover, an ideal solution to the industry's needs would result in improved tire wear rates for both tires in a dual tire assembly.

### Summary of the Invention

The subject invention according to one aspect relates to an improved dual tire assembly for a trailer in which two tires are proximally mounted in a free rolling side by side relationship. Each tire is constructed having the tire carcass slightly angled away from the conventional ninety degree configuration common to trailer tires to minimize torque windup and therefore reduce the degree to which the individual tires in a dual assembly fight each other. Such a deviation from ninety degrees is made relatively small enough to avoid experiencing a significant rolling resistance penalty in each tire yet large enough so that the torque windup effect of one tire on the other tire is minimized. Increased levels of tread wear are thus achieved.

Pursuant to another aspect of the invention, a method of reducing torque windup in a dual tire assembly is achieved comprising the steps: configuring both tires in a dual assembly to provide a carcass angled slightly from ninety degrees; mounting such tires in proximal relationship in a dual tire assembly on a common axle; operating both tires in a free rolling mode of operation; and using the angled carcass of each tire to minimize the effect of torque windup imposed by the opposite tire.

Pursuant to yet another aspect of the invention is to minimize the effect of torque windup in a free rolling dual tire assembly through the configuring of each tire in the dual assembly to have a tire carcass angled to the preferred deviation from ninety degrees.

### Definitions

As used herein and in the claims, the terms
"axial" and "axially" refer to directions which are parallel to the axis of rotation of a tire;
"radial" and "radially" refer to directions that are perpendicular to the axis of rotation of a tire;
"carcass" refers to the tire structure apart from the belt structure, tread, undertread, and sidewall rubber but including the beads, (carcass plies are wrapped around the beads);
"circumferential" refers to lines or directions extending along the perimeter of the surface of the annular tread perpendicular to the axial direction;
"equatorial plane (EP)" refers to a plane that is perpendicular to the axis of rotation of a tire and passes through the center of the tire's tread;
"crown" refers to substantially the outer circumference of a tire where the tread is disposed;
"ply" means a continuous layer of rubber coated parallel cords;
"spliced belt ply" means that the ply has the ends extending across the whole lateral width of the belt, spliced and overlapping, forming a lap-splice or a butt-splice;
"dual mounted tires" refers to a pair of commonly but not necessarily low aspect ratio tires mounted in tandem on a common axle.

### Brief Description of the Drawings

The invention will be described by way of example and with reference to the accompanying drawings in which:
FIG. 1 is a cross-sectional view of half a tire according to the invention taken in a plane that contains the axis of rotation of the tire;
FIG. 2 is a graph depicting torque on trailer dual tires during free roll and hard braking, graphing torque against time;
FIG. 3 is a perspective view of a portion of a prior art tire having a ninety degree carcass configuration with portions of the tire removed to reveal the tread belt and carcass configuration; and
FIG. 4 is a perspective view of a portion of a tire for a dual tire assembly configured pursuant to the invention.

### Detailed Description of the Invention

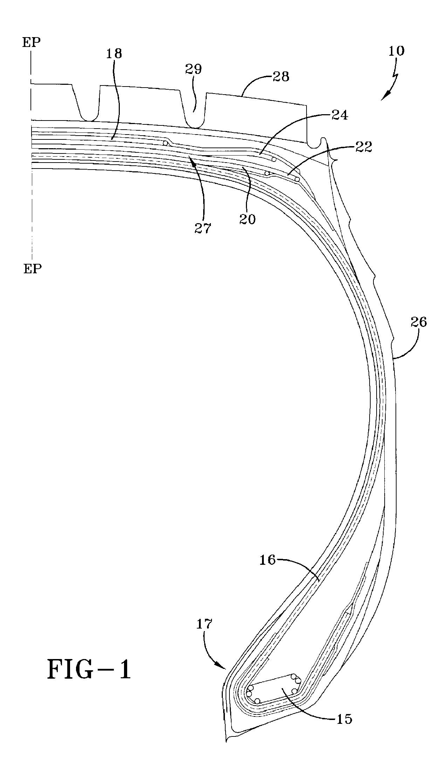

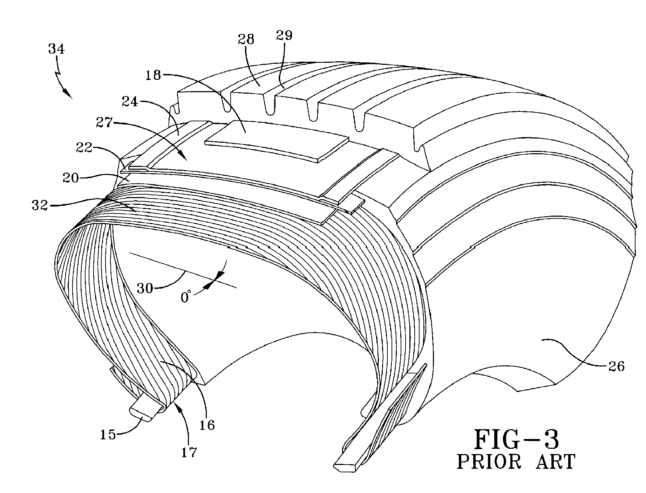

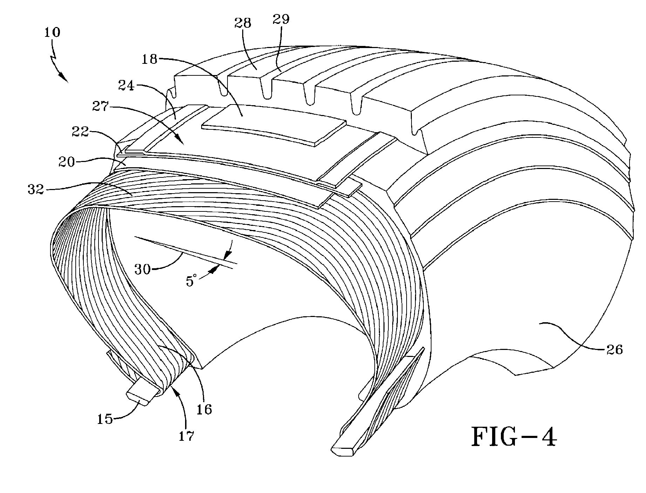

With reference to Fig. 1, a preferred embodiment of the invention is illustrated. The pneumatic tire 10 comprises a pair of substantially parallel annular bead cores 15 located in beads 17 and a carcass ply 16. The carcass ply is wrapped over bead cores 15 and over a crown region of the tire at a prescribed angle 30 (shown in Figs. 3 and 4) with respect to the equatorial plane (EP) of the tire. Each bead comprises an apex, reinforcing plies such as chippers and flippers and gum strips as is well known in the tire art. A tread 28 comprising grooves 29 is disposed over a crown reinforcing or belt structure 27 and sidewalls 26 are arranged between the tread 28 and the beads 17. The carcass ply and belt plies, as is common in the art, are reinforced with substantially parallel longitudinal reinforcing members.

The crown reinforcing structure 27 pursuant to conventional construction common in the art may comprise multiple spliced belts plies 18, 20, 22, and 24 reinforced with steel cords. The plies 18-24 may be reinforced with steel cords making an angle with respect to the equatorial plane (EP). Practice of the subject invention is not dependent on any particular crown reinforcing structure and any structure 27 in the art suitable for use in free rolling dual tire assemblies may be utilized. In the illustrated embodiment, the steel cords of the belt plies 18-24 have steel cord construction commonly used in the truck tire belt ply reinforcement field. The steel grades are high tensile.

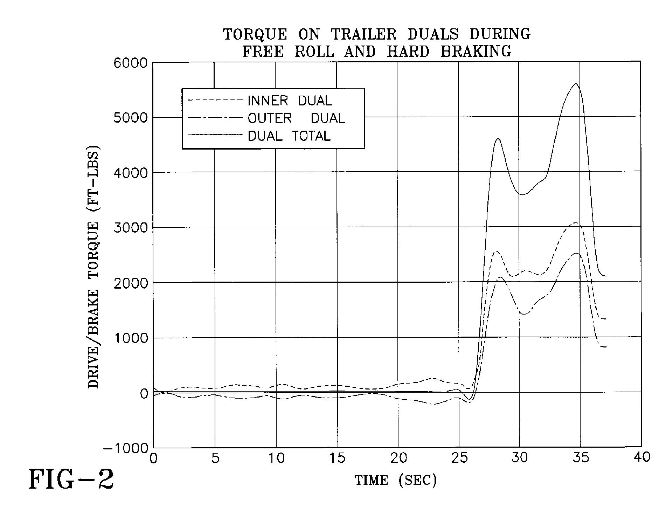

As seen from FIG. 3, a tire 34, commonly used in the industry for dual assembly applications such as in free rolling truck trailer tires, is generally constructed having a carcass cord construction 32 extending across a crown region of the tire at ninety degrees with respect to the equatorial plane. When two such tires are mounted side by side in a dual tire assembly, the drive/braking torque of one tire impacts the torque seen by the mating tire. FIG. 2 graphically shows that each free-rolling tire is at odds with or fights against the mating dual tire. When one tire is torquing up, the mate is experiencing increasing negative torque. This result is due to a number of causes such as different rolling diameters or tire pressure of one tire versus the mating tire. Such a result may further be influenced by slight differences in road conditions seen by each tire in a dual assembly such as road crown variations. As a result, for long haul trailer applications, tire free-rolling torque issues can be responsible for higher rates of wear for both tires in a dual assembly.

In order to ameliorate the torque windup caused by interaction between the two tires in a dual assembly, the subject invention employs tires in the dual assembly having a slightly angled carcass (as opposed to conventional 90 degree carcass constructions) in the crown region. The deviation angle of the tire carcass in each tire of a dual assembly is preferably relatively small, in the range of 0.5 to 10 degrees, preferably 6 to 2 degrees. Five degrees is shown in the tire of FIG. 4. With such a slight angle in the carcass of each tire, the torque windup interaction will be counteracted and a reduction in the degree to which the individual tires in a dual assembly "fight" each other will be achieved. Moreover, since the carcass angle deviation from ninety degrees is small, virtually no rolling resistance penalty will result.

## Claims

1. A free-rolling dual tire assembly of the type comprising first and second tires (10) proximately mounted on a common axle, **characterized by**:
each said tire (10) having at least one carcass ply (16) extending across a crown region of the tire (10) and making an angle (30) between 80 and 89.5 degrees with respect to the equatorial plane (EP).

2. The free-rolling dual tire assembly according to claim 1, wherein the carcass ply angle deviation is 2 to 6 degrees.

3. The free-rolling dual tire assembly according to claim 1, wherein the carcass ply angle deviation is substantially five degrees.

4. The free-rolling dual tire assembly according to claim 2 or 3, wherein the angled carcass ply (16) of first tire resists torque buildup imposed upon the one tire by the proximal second tire.

5. A method of reducing torque windup between first and second tires mounted in a free-rolling dual tire assembly, the method comprising:
constructing at least one carcass ply (16) of each tire (10) to extend across a crown region of the tire at an angle between 80 and 89.5 degrees with respect to an equatorial plane (EP) of the tire (10); and
positioning such tires in the dual tire assembly in relative proximity so that the angled carcass ply (16) of the first tire (10) resists torque buildup imposed upon the one tire by the proximally positioned second tire.

6. The method according to claim 5, further comprising the step of creating an angle of deviation of substantially five degrees in the carcass ply (16) across the crown region.

7. The method according to claim 5, further comprising the step of creating an angle of deviation of 2 to 6 degrees in the carcass ply (16) across the crown region.

8. A method of reducing torque windup in a dual tire assembly, the method comprising the steps:
selecting both tires in a dual assembly to provide at least one carcass ply (16) angled across a crown region of the tire at an angle (30) between 80 and 89.5 degrees with respect to an equatorial plane (EP) of the tire (10);
mounting such tires in a dual tire assembly on a common axle in relative proximity sufficient to cause the torque from one tire to influence the torque windup in the other tire;
operating both tires in a free rolling mode of operation; and using the angled carcass ply (16) of each tire to minimize the effect of torque windup imposed on the tire by the opposite tire.
